(19) Europäisches Patentamt / European Patent Office / Office européen des brevets

(11) EP 3 435 786 B1

(12) EUROPEAN PATENT SPECIFICATION

(45) Date of publication and mention of the grant of the patent: **01.07.2020 Bulletin 2020/27**

(21) Application number: **17715134.7**

(22) Date of filing: **03.04.2017**

(51) Int Cl.:
***A23L 29/212*** *(2016.01)*
***A23L 2/395*** *(2006.01)*
***A23L 2/52*** *(2006.01)*
***A23P 10/30*** *(2016.01)*
***A23L 5/44*** *(2016.01)*

(86) International application number: **PCT/EP2017/057814**

(87) International publication number: **WO 2017/168006 (05.10.2017 Gazette 2017/40)**

(54) **BEVERAGES COMPRISING STABLE GRANULES OF MILLED LUTEIN**

GETRÄNKE MIT STABILEM GRANULAT AUS GEMAHLENEM LUTEIN

BOISSONS COMPRENANT DES GRANULES STABLES DE LUTÉINE BROYÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2016 CH 4292016**

(43) Date of publication of application: **06.02.2019 Bulletin 2019/06**

(73) Proprietor: **DSM IP Assets B.V.**
**6411 TE Heerlen (NL)**

(72) Inventors:
- **BECK, Markus**
  **4303 Kaiseraugst (CH)**
- **ESTRELLA, Antoino**
  **4303 Kaiseraugst (CH)**
- **FUNDA, Elger**
  **4303 Kaiseraugst (CH)**
- **HITZFELD, Andrea**
  **4303 Kaiseraugst (CH)**
- **SCHAEFER, Christian**
  **4303 Kaiseraugst (CH)**
- **SCHLEGEL, Bernd**
  **4303 Kaiseraugst (CH)**
- **URBAN, Kai**
  **4303 Kaiseraugst (CH)**

(74) Representative: **Kurt, Manfred**
**DSM NUTRITIONAL PRODUCTS LTD.**
**Patent Department**
**Wurmisweg 576**
**4303 Kaiseraugst (CH)**

(56) References cited:
**EP-A1- 1 433 387**
**EP-A1- 1 964 479**
**EP-A1- 2 644 041**
**WO-A1-2009/071295**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 435 786 B1

## Description

Summary of the invention

The present invention is directed towards the use of granules in beverages, whereby the granules comprise

(i) a milled carotenoid selected from the group consisting of lutein and zeaxanthin and any mixture thereof having the following particle size distribution:
D [3,2] in the range of from 0.6 to 1.5 μm, and D [v, 0.5] in the range of from 1.1 to 3.5 μm, and
(ii) a matrix comprising at least one modified food starch, a glucose syrup and sucrose,
(iii) a water-soluble antioxidant,
wherein the granules have the following particle size distribution:

D [3,2] in the range of from 200 to 300 μm, and D [v, 0.5] in the range of from 220 to 320 μm,
all D values as measured by laser diffraction according to the Fraunhofer scattering model,
whereby the milled carotenoid is encapsulated by the matrix.

The present invention is further directed towards the granules as such and the beverages as such, as well as to a process for the manufacture of such granules.
Preferably the particle size distribution is measured after the re-dispersed granules were treated with ultrasound and centrifuged.
The carotenoid is selected from the group consisting of lutein and zeaxanthin and any mixture thereof. Surprisingly the beverages comprising granules of milled lutein according to the present invention show an intense yellow color.
Preferably the carotenoid is lutein. Lutein plays an important role in eye health. Thus, there is an increasing demand not only for dietary supplements, especially in form of tablets, comprising lutein, but also for beverages being supplemented with lutein.
The water-soluble antioxidant is preferably sodium ascorbate.
Preferably the milled carotenoid has the following particle size distribution: D [3,2] is in the range of from 0.8 to 1.2 μm, preferably D [3,2] is in the range of from 0.8 to 1.1 μm, as measured by laser diffraction (Malvern Instruments Ltd, Malvern, UK, Mastersizer 3000) according to the Fraunhofer scattering model.
D [v, 0.5] is preferably in the range of from 1.1 to 2.6 μm, more preferably D [v, 0.5] is in the range of from 1.1 to 2.1 μm, as measured by laser diffraction (Malvern Instruments Ltd, Malvern, UK, Mastersizer 3000) according to the Fraunhofer scattering model.
The particle size distribution of the granules is preferably as follows:
D [3,2] in the range of from 200 to 300 μm (preferably in the range of from 230 to 270 μm) and D [v, 0.5] in the range of from 220 to 320 μm (preferably in the range of from 240 to 290 μm), all D values as measured by laser diffraction (Malvern Instruments Ltd, Malvern, UK, Mastersizer 3000) according to the Fraunhofer scattering model.
EP1964479 A1 disclosing a process for the manufacture of a powder containing carotenoids is considered as background art.

Detailed description of the invention

Beverages according to the present invention

According to the present invention the granules of the milled carotenoid (especially lutein) with the preferences as given above can be preferably used to color and/or fortify and/or supplement the following beverages: soft drinks as well as flavored waters, fortified waters, sports drinks, mineral drinks and carbonated beverages. Fruit juices and fruit-juice containing soft drinks may also be colored. Alcoholic beverages, instant beverage powders, sugar-containing beverages and diet beverages containing non-calorific or artificial sweeteners represent still further examples of beverages which can be colored and/or fortified and/or supplemented by the granules of the present invention. Such colored and/or fortified and/or supplemented beverages are also encompassed by the present invention, whereby flavored waters, soft drinks and sport drinks are preferred.
The soft drinks may be pasteurized or non-pasteurized. Usually they have a pH in the range of from 2 to 5, preferably in the range of from 2.5 to 4, even more preferably in the range of from 2.8 to 3.6, i.e. that they are acid.
The beverages according to the present invention comprise granules, whereby the granules comprise

(i) a milled carotenoid selected from the group consisting of lutein and zeaxanthin and any mixture thereof having

the following particle size distribution:
D [3,2] in the range of from 0.6 to 1.5 μm, and D [v, 0.5] in the range of from 1.1 to 3.5 μm, and
(ii) a matrix comprising at least one modified food starch, a glucose syrup and sucrose,
(iii) a water-soluble antioxidant,
wherein the granules have the following particle size distribution:

D [3,2] in the range of from 200 to 300 μm, and D [v, 0.5] in the range of from 220 to 320 μm,
all D values as measured by laser diffraction according to the Fraunhofer scattering model.

Amount of milled carotenoid in the beverage

Preferably the amount of milled carotenoid (with the preferences as given above) in the beverage is in the range of from 1 ppm to 20 ppm, more preferably it is in the range of from 1 ppm to 15 ppm, most preferably it is in the range of from 1 ppm to 10 ppm, based on the total weight of the beverage.
The milled carotenoid is added to the beverage in the form of granules according to the present invention.
The granules according to the present invention are now described in more detail.

Granules according to the present invention

The present invention is directed towards granules comprising

(i) a milled carotenoid selected from the group consisting of lutein and zeaxanthin and any mixture thereof having the following particle size distribution:
D [3,2] in the range of from 0.6 to 1.5 μm, and D [v, 0.5] in the range of from 1.1 to 3.5 μm, and
(ii) a matrix comprising at least one modified food starch, a glucose syrup and sucrose,
(iii) a water-soluble antioxidant,
wherein the granules have the following particle size distribution:

D [3,2] in the range of from 200 to 300 μm, and D [v, 0.5] in the range of from 220 to 320 μm,
all D values as measured by laser diffraction according to the Fraunhofer scattering model.

The preferences for the particle size distribution have already been given above.

Carotenoid

The carotenoid is selected from the group consisting of lutein and zeaxanthin and any mixture thereof, more preferably the carotenoid is lutein.

Lutein

As starting material most preferably a so-called "lutein cake" as available from Kemin Foods (US) having a lutein content of 50-80 weight-% is used. This lutein cake is obtained by extracting Marigold Flowers. The lutein cake also contains zeaxanthin, whereby the molar ratio of the lutein to zeaxanthin is around 9 : 1. Lutein obtained from any other natural source or by fermentation or by chemical synthesis may also be used.
Lutein extracted from natural sources often contains also certain amounts of zeaxanthin.
In a preferred embodiment of the present invention no other carotenoid except lutein and/or zeaxanthin is present. Excluded of this exception are carotenoids that may already be present in traces in the starting material, e.g. in the "lutein cake".

Amount of Carotenoid

The amount of the carotenoid is preferably in the range of from 1-30 weight-%, more preferably in the range of from 5-25 weight-%, even more preferably in the range of from 5-17 weight-%, most preferably in the range of from 10-17 weight-%, based on the total weight of the granules.
If the carotenoid is a mixture of lutein and zeaxanthin, their molar ratio is preferably in the range of from 20 : 1 to 2 : 1, more preferably their molar ratio is in the range of from 10 : 1 to 4 : 1.

"Modified food starch"

A modified food starch is a food starch that has been chemically modified by known methods to have a chemical structure which provides it with a hydrophilic and a lipophilic portion. Preferably the modified food starch has a long hydrocarbon chain as part of its structure (preferably C5-C18).

One modified food starch is preferably used to make the granules of this invention, but it is also possible to use a mixture of two or more different modified food starches.

Starches are hydrophilic and therefore do not have emulsifying capacities. However, modified food starches are made from starches substituted by known chemical methods with hydrophobic moieties. For example starch may be treated with cyclic dicarboxylic acid anhydrides such as succinic anhydrides, substituted with a hydrocarbon chain (see O. B. Wurzburg (editor), "Modified Starches: Properties and Uses, CRC Press, Inc. Boca Raton, Florida, 1986, and subsequent editions). A particularly preferred modified food starch of this invention has the following formula (I)

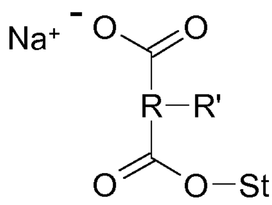
(I)

wherein St is a starch, R is an alkylene radical and R' is a hydrophobic group. Preferably R is a lower alkylene radical such as dimethylene or trimethylene. R' may be an alkyl or alkenyl group, preferably having 5 to 18 carbon atoms. A preferred compound of formula (I) is an "OSA-starch" (starch sodium octenyl succinate). The degree of substitution, i.e. the number of esterified hydroxyl groups to the number of free non-esterified hydroxyl groups usually varies in a range of from 0.1% to 10%, preferably in a range of from 0.5% to 4%, more preferably in a range of from 3% to 4%.

The term "OSA-starch" denotes any starch (from any natural source such as corn, waxy maize, waxy corn, wheat, tapioca and potato or synthesized) that was treated with octenyl succinic anhydride (OSA). The degree of substitution, i.e. the number of hydroxyl groups esterified with OSA to the number of free non-esterified hydroxyl groups usually varies in a range of from 0.1% to 10%, preferably in a range of from 0.5% to 4%, more preferably in a range of from 3% to 4%. OSA-starches are also known under the expression "modified food starch".

The term "OSA-starches" encompasses also such starches that are commercially available e.g. from National Starch/Ingredion under the tradenames HiCap 100, Capsul (octenylbutanedioate amylodextrin), Capsul HS, Purity Gum 2000, Clear Gum Co03, UNI-PURE, HYLON VII; from National Starch/Ingredion and Roquette Frères, respectively; from CereStar/Cargill under the tradename C*EmCap or from Tate & Lyle.

Amount of the modified food starch/OSA starch

The amount of the modified food starch (preferably the OSA starch) is preferably in the range of from 10 to 50 weight-%, more preferably in the range of from 25 to 45 weight-%, based on the total weight of the granules.

Glucose syrup

The glucose syrup can be used as such or in a dried form. Both are commercially available starch hydrolysates, i.e. a mixture of mono-, oligo- and polysaccharides. According to the present invention a dried glucose syrup is preferably used. The preferences given for the dried glucose syrup apply also for the non-dried glucose syrup.

The term "dextrose equivalent" (DE) denotes the degree of hydrolysis and is a measure of the amount of reducing sugar calculated as D-glucose based on dry weight; the scale is based on native starch having a DE close to 0 and glucose having a DE of 100.

Dried glucose syrup is, as well as non-dried glucose syrup, usually classified by its DE value, which is above 20. According to the present invention preferably a dried glucose syrup is used with a DE in the range of from 20 to 95, more preferably in the range of from 20 to 30, most preferably in the range of from 20 to 23.

In another embodiment of the present invention a mixture of two glucose syrups is used - one having a low DE, preferably a DE ≤ 25, more preferably a DE in the range of from 20 to 25, and the other having a high DE, preferably a DE ≥ 90, more preferably a DE in the range of from 90 to 100.

Amount of dried glucose syrup

The amount of the dried glucose syrup is in the range of from 0.1 to 40 weight-%, preferably in the range of from 5 to 40 weight-%, more preferably in the range of from 10 to 30 weight-%, most preferably in the range of from 15 to 25 weight-%, based on the total weight of the formulation.
If non-dried glucose syrup is used, it is used in the same amount.

Sucrose (= saccharose)

In a preferred embodiment of the present invention the weight ratio of the modified food starch to the dried glucose syrup to the sucrose is (1.5-2.5) to (0.5-1.5) to (0.5-1.5), more preferably it is (1.8-2.2) to (0.8-1.2) to (0.8-1.2), most preferably it is 2 to 1 to 1.

Amount of sucrose

The amount of sucrose is preferably in the range of from 5 to 40 weight-%, more preferably it is in the range of from 10 to 30 weight-%, most preferably it is in the range of from 15 to 25 weight-%, based on the total weight of the granules.
In a preferred embodiment of the present invention the amount of the dried glucose syrup and the amount of sucrose is the same in kilograms. In a further preferred embodiment of the present invention the amount of modified food starch in kilograms is the same amount as the total amount of the dried glucose syrup and sucrose in kilograms.

Water-soluble anti-oxidant

Preferably the water-soluble anti-oxidant is sodium ascorbate, but other water-soluble anti-oxidants being food-grade and thus, suitable for human consumption may also be used.

Amount of water-soluble anti-oxidant

The amount of waters-soluble anti-oxidant (especially sodium ascorbate) is preferably in the range of from 0.1 to 10 weight-%, more preferably in the range of from 2 to 7 weight-%, most preferably in the range of from 4 to 6 weight-%, based on the total weight of the granules.
The granules of the present invention may also contain up to 7 weight-% of water, preferably they contain up to 5 weight-% of water, based on the total weight of the granules.
In a preferred embodiment of the present invention the amount of the milled carotenoid, the amount of the at least one modified food starch, the amount of the glucose syrup, the amount of sucrose and the amount of the water-soluble antioxidant (being preferably sodium ascorbate) sum preferably up to an amount of at least 90 weight-%, preferably of at least 95 weight-%, based on the total weight of the granules.
In an even more preferred embodiment of the present invention the granules consist of the milled carotenoid, the at least one modified food starch, the glucose syrup, sucrose, the water-soluble antioxidant (being preferably sodium ascorbate) and water.
In a further preferred embodiment of the present invention a lutein cake having a lutein content of 50-80 weight-% is used, whereby the weight ratio of the lutein cake to the matrix consisting of the amount of modified food starch + dried glucose syrup + sucrose is 1 : (4 - 6), preferably 1 : (4.8 - 5.5), more preferably 1 to (5-5.3).
In another preferred embodiment of the present invention a lutein cake having a lutein content of 50-80 weight-% is used, whereby the weight ratio of the lutein cake to the modified food starch is 1 to (1.5-4), preferably 1 to (2-3), more preferably 1 to (2.5-2.7).
In a further preferred embodiment of the present invention a lutein cake having a lutein content of 50-80 weight-% is used, whereby the weight ratio of the lutein cake to the dried glucose syrup is 1 to (0.5-2), preferably 1 to (1.0-1.5), more preferably 1 to (1.25-1.35).
In a further preferred embodiment of the present invention a lutein cake having a lutein content of 50-80 weight-% is used, whereby the weight ratio of the lutein cake to sucrose is 1 to (0.5-2), preferably 1 to (1.0-1.5), more preferably 1 to (1.25-1.35).
Preferably no other compounds are present. Preferably no further hydrocolloids beside modified food starch and no further emulsifiers are present.
Compounds preferably not-being-present are the following ones:

- Hydrolyzed lecithin products, especially those as disclosed on page 5, line 5-19 of WO 2009/071295;

- Gum Acacia; Gum Arabic as e.g. disclosed in WO 2007/009601; also modified as disclosed in WO 2008/110225;
- Gum Ghatti as e.g. described in WO 2009/147158;
- Proteins such as gelatin (fish, swine, bovine gelatin);
- Cellulose derivatives such as e.g. carboxmethylcellulose;
- Plant proteins;
- Milk proteins;
- Ligninsulfonate;
- Conjugates of plant gums and modified food starch, especially those as disclosed in WO 2011/039336;
- Sodium lauryl sulfate and other sodium alkyl sulfates;
- Fat-soluble antioxidants such as e.g. dl-α-tocopherol;
- Isomalt as e.g. used in the process of US 2008/0026124;
- α-zeacarotene;
- β-zeacarotene.

In an especially preferred embodiment of the present invention none of the following compounds is present in the granules:

- Hydrolyzed lecithin products, especially those as disclosed on page 5, line 5-19 of WO 2009/071295;
- Gum Arabic as e.g. disclosed in WO 2007/009601;
- Fat-soluble antioxidants such as e.g. dl-α-tocopherol;
- Isomalt as e.g. used in the process of US 2008/0026124;
- α-zeacarotene;
- β-zeacarotene.

In a preferred embodiment the granules of the present invention do not contain an oil. The term "oil" does not encompass any lipophilics that may be present in the granules, because they are part of the lutein cake used as source of lutein.

The term "oil" in the context of the present invention encompasses glycerol and any triglyceride such as vegetable oils or fats like corn oil, sunflower oil, soybean oil, safflower oil, rapeseed oil, peanut oil, palm oil, palm kernel oil, cotton seed oil, olive oil or coconut oil or MCT (middle chain triglycerides) as well as any mixture thereof.

The oils can be from any origin. They can be natural, modified or synthetic. The term "oil" in the context of the present invention thus also encompasses canola oil, sesame oil, hazelnut oil, almond oil, cashew oil, macadamia oil, mongongo nut oil, pracaxi oil, pecan oil, pine nut oil, pistachio oil, sacha Inchi (Plukenetia volubilis) oil or walnut oil.

The present invention also encompasses any combination of any preferred feature of the milled carotenoid as mentioned in this patent application with any preferred feature of the modified food starch, glucose syrup, sucrose, water-soluble antioxidant and also their preferred weight ratios and the optional other ingredients of the granules as mentioned in this patent application though not explicitly mentioned.

Thus any combination of preferred embodiments of the present invention is encompassed by the present invention though not explicitly mentioned.

The **preferred granules of the present invention** are granules comprising a milled carotenoid in an amount in the range of from 1 to 30 weight-% (preferably 5 to 25 weight-%), at least one modified food starch in an amount in the range of from 10 to 50 weight-% (preferably 25 to 45 weight-%), a glucose syrup in an amount in the range of from 0.1 to 40 weight-% (preferably 10 to 30 weight-%), sucrose in an amount in the range of from 0.1 to 40 weight-% (preferably 10 to 30 weight-%), at least one water-soluble antioxidant (preferably sodium ascorbate) in an amount in the range of from 0.1 to 10 weight-% (preferably 2 to 7 weight-%) and water in an amount of from 0 to 7 weight-%, all amounts being based on the total amount of the granules, wherein the carotenoid is selected from the group consisting of lutein and zeaxanthin and any mixture thereof, and wherein the milled carotenoid has the following particle size distribution:

D [3,2] in the range of from 0.6 to 1.5 μm, and D [v, 0.5] in the range of from 1.1 to 3.5 μm, and wherein the granules have the following particle size distribution:

D [3,2] in the range of from 200 to 300 μm, and D [v, 0.5] in the range of from 220 to 320 μm, all D values as measured by laser diffraction according to the Fraunhofer scattering model, whereby the milled carotenoid is encapsulated by the matrix.

Further preferences of the compounds of the formulation of the present invention (milled carotenoid, modified food starch, glucose syrup, sucrose, water-soluble antioxidant and water) have already been given above.

Processes for the manufacture of the granules according to the present invention

The granules according to the present invention are obtained according to the following process:

a) providing an aqueous solution of at least one modified food starch, a glucose syrup and sucrose;
b) adding the carotenoid selected from the group consisting of lutein and zeaxanthin and any mixture thereof to the solution of step a) hereby obtaining a suspension;
c) milling the suspension of step b) until the following particle size distribution of the milled carotenoid is reached: D [3,2] in the range of from 0.6 to 1.5 μm and D [v, 0.5] in the range of from 1.1 to 3.5 μm, both D values as measured by laser diffraction (Malvern Instruments Ltd, Malvern, UK, Mastersizer 3000) according to the Fraunhofer scattering model;
d) spray-granulating the suspension of step c) to obtain granules according to the present invention;
whereby a water-soluble antioxidant (preferably sodium ascorbate) is added during the process.

Optionally a pH adjustment to a pH in the range of from 2.5 to 4.0 (preferably in the range of from 2.9 to 3.5) may be carried out after step c). In a preferred embodiment of the present invention this pH adjustment step is carried out.
By this process granules are obtained which have preferably the following particle size distribution:
D [3,2] in the range of from 200 to 300 μm (preferably in the range of from 230 to 270 μm), D [v, 0.5] in the range of from 220 to 320 μm (preferably in the range of from 240 to 290 μm), both D values as measured by laser diffraction (Malvern Instruments Ltd, Malvern, UK, Mastersizer 3000) according to the Fraunhofer scattering model.
In a preferred embodiment of the present invention step d) is carried out by drying the suspension obtained in step c) by fluid-bed granulation.

Advantages of the granules and beverages of the present invention

The granules of the present invention have an excellent flowability so they can be easily added to beverages.
The granules of the present invention show especially a flowability of at least 100 g/min through an orifice with a diameter of 5 mm, and/or a flowability of at least 250 g/min through an orifice with a diameter of 7 mm and/or a flowability of at least 500 g/min through an orifice with a diameter of 9 mm and/or a flowability of at least 700 g/min through an orifice with a diameter of 10 mm and/or a flowability of at least 2000 g/min through an orifice with a diameter of 15 mm.
In a preferred embodiment the granules of the present invention show a flowability in the range of from 100 g/min to 150 g/min through an orifice with a diameter of 5 mm, and/or a flowability in the range of from 250 g/min to 350 g/min through an orifice with a diameter of 7 mm and/or a flowability in the range of from 500 g/min to 750 g/min through an orifice with a diameter of 9 mm and/or a flowability in the range of from 700 g/min to 850 g/min through an orifice with a diameter of 10 mm and/or a flowability in the range of from 2000 g/min to 3000 g/min through an orifice with a diameter of 15 mm.
Advantageously the beverages containing the granules according to the present invention are color stable. Such beverages are especially soft drinks having a pH in the range of from 2 to 5, whereby the soft drinks may be pasteurized or non-pasteurized.
"Color-stable" in the context of the present invention means that the color difference DE* between the initial color and the color after a storage time of 3 months should be lower than 10 (DE* < 10). A DE* < 10 means that the color difference is in the acceptable area and under DE*<3 cannot be seen by naked eyes, i.e. without the use of an apparatus such as a colorimeter.
The beverages, especially the soft drinks, containing the granules according to the present invention show a color difference DE* ≤ 1 over 60 days.
Beverages, especially pasteurized and non-pasteurized soft drinks, according to the present invention comprising the granules according to the present invention show a turbidity ≤ 150 NTU, preferably a turbidity in the range of from 100 to 150 NTU. The turbidity remains in this range even after a storage time of up to 60 days. Furthermore, such soft drinks show a good chemical stability, meaning that the content of lutein is not decreasing below 80% of the initial value within a storage time of 60 days.
The beverages, especially the pasteurized and non-pasteurized soft drinks, according to the present invention show also a very good performance with respect to their appearance attributes. That means that (almost) no ringing and (almost) no precipitation/sedimentation of the carotenoid in the beverage occurs.
Such pasteurized and non-pasteurized soft drinks with 10 ppm of lutein show a colour value L* in the range of from 85 to 95, a value a* in the range of from 3.0 to 5.5 and a value b* in the range of from 25 to 40. Preferably such pasteurized and non-pasteurized soft drinks with 10 ppm of lutein show a colour value L* in the range of from 88 to 91, a value a* in the range of from 3.5 to 5.2 and a value b* in the range of from 29 to 37. More preferably such pasteurized and non-pasteurized soft drinks with 10 ppm of lutein show a colour value L* in the range of from 88.6 to 90.3, a value

a* in the range of from 3.7 to 5.0 and a value b* in the range of from 29.4 to 36.6.

The invention is now further illustrated in the following non-limiting examples.

## Examples

The following abbreviations are used: RH = room humidity.

### Example 1: Manufacture of granules of lutein and zeaxanthin according to the present invention

150 kg of OSA-Starch, 75 kg of dried glucose syrup and 75 kg of sucrose are dissolved in 440 l of preheated water at 72°C for at least 30 minutes (matrix). 60 kg of FloraGlo lutein crystals (as available from Kemin Foods, Des Moines, US) are then added to the matrix under stirring at a temperature between 36°C and 20°C. After pH adjustment of the resulting suspension to a pH of 3.5 the resulting pH-adjusted suspension is added to the milling beads (diameter of 0.3 mm) and milling is carried out in several passages. To the resulting suspension 18 kg of sodium ascorbate are added. Then water is added and spray dry granulation started. 275 kg of the granules are obtained.

### Example 2: Manufacture of granules of lutein and zeaxanthin according to the present invention

160 kg of OSA-Starch, 80 kg of dried glucose syrup and 80 kg of sucrose are dissolved in 480 l of preheated water at 72°C for at least 30 minutes (matrix). 60 kg of FloraGlo lutein crystals (as available from Kemin Foods, Des Moines, US) are then added to the matrix under stirring at a temperature between 36°C and 29°C. After pH adjustment of the resulting suspension to a pH of 2.9 the resulting pH-adjusted suspension is added to the milling beads (diameter of 0.3 mm) and milling is carried out in several passages. To the resulting suspension 20 kg of sodium ascorbate are added. Then water is added and spray dry granulation started. 305 kg of the granules are obtained.

### Example 3: Manufacture of granules of lutein and zeaxanthin according to the present invention

160 kg of OSA-Starch, 80 kg of dried glucose syrup and 80 kg of sucrose are dissolved in 480 l of preheated water at 72°C for at least 30 minutes (matrix). 60 kg of FloraGlo lutein crystals (as available from Kemin Foods, Des Moines, US) are then added to the matrix under stirring at a temperature between 39 ° C and 21 °C. After pH adjustment of the resulting suspension to a pH of 3.03 the resulting pH-adjusted suspension is added to the milling beads (diameter of 0.3 mm) and milling is carried out in several passages. To the resulting suspension 18 kg of sodium ascorbate are added. Then water is added and spray dry granulation started. 330 kg of the granules are obtained.

### Measurement of particle size

All particle sizes of the solid particles of the present invention are determined by laser diffraction technique using a "Mastersizer 3000" of Malvern Instruments Ltd., UK. Further information on this particle size characterization method can e.g. be found in "Basic principles of particle size analytics", Dr. Alan Rawle, Malvern Instruments Limited, Enigma Business Part, Grovewood Road, Malvern, Worcestershire, WR14 1XZ, UK and the "Manual of Malvern particle size analyzer". Particular reference is made to the user manual number MAN 0096, Issue 1.0, Nov. 1994.

### Measurement of the particle size distribution

The particle size distribution was measured after the re-dispersed granules of example 1, 2 and 3, respectively, were treated with ultrasound and centrifuged.

### Flowability

All three granules manufactured according to examples 1-3 showed an excellent flowability (see table 1 below).

Table 1:

| Flow [g/min] through an orifice with a diameter of | Example 1 - Flow [g/min] | Example 2 - Flow [g/min] | Example 3 - Flow [g/min] |
|---|---|---|---|
| **15 mm** | 2308 | 2308 | 2368 |
| **10 mm** | 789 | 789 | 796 |

(continued)

| Flow [g/min] through an orifice with a diameter of | Example 1 - Flow [g/min] | Example 2 - Flow [g/min] | Example 3 - Flow [g/min] |
|---|---|---|---|
| **9 mm** | 571 | 657 | 672 |
| **7 mm** | 300 | 299 | 305 |
| **5 mm** | 126 | 126 | 124 |

Density

The bulk density and the tapped density of all three examples is high as can be seen in the following table 2.

Table 2:

| | Example 1 | Example 2 | Example 3 |
|---|---|---|---|
| **Bulk density** | 0.71 $g/cm^3$ | 0.71 $g/cm^3$ | 0.71 $g/cm^3$ |
| **Tapped density** | 0.79 $g/cm^3$ | 0.79 $g/cm^3$ | 0.79 $g/cm^3$ |

Beverages

According to the present invention the "Lutein SG-VG form" (SG = Spray-granulated;

VG = vegetable) with the particle size as given above and as manufactured according to example 1, 2 or 3 can be preferably used to color the following beverages: soft drinks as well as flavored waters, fortified waters, sports drinks, mineral drinks and carbonated beverages. Fruit juices and fruit-juice containing soft drinks may also be colored. Alcoholic beverages, instant beverage powders, sugar-containing beverages and diet beverages containing non-calorific or artificial sweeteners represent still further examples of beverages which can be colored by the lutein granules of the present invention.

Soft drink application

The soft drink has the following composition:

| | *Ingredient* | **Amount of ingredient** |
|---|---|---|
| 1 | Potassium sorbate | 0.2 g |
| 2 | Sugar syrup (64° Brix) | 156.2 g |
| | Ascorbic acid | 0.2 g |
| | Aqueous 50-weight-% citric acid | 5.0 g |
| | Apricot flavor (water-soluble, Givaudan 10095-36) | 0.2 g |
| | Stock solution * | 10 g (i.e. 10 ppm) |
| 3 | Water | Filled up so that a total amount of the soft drink of 1000 ml results |
| | Total amount | 1000 ml |

* From the granules according to example 1, 2 and 3 a stock solution is prepared, whereby the granules are diluted with water so that the stock solution has a concentration of the Lutein of 0.1 weight-% (= 1000 ppm).

The soft drink is prepared as follows:
Potassium sorbate 1) is dissolved in water, the other ingredients 2) are added one after the other while the mixture is gently stirred. Then the resulting soft drink syrup is diluted with drink water in such an amount to result in 1000 ml of the soft drink. The pH of the soft drink is in the range of 2.8 to 3.5.

The soft drink is then filled in a glass bottle and the bottle sealed with a metallic cap. The bottle is pasteurized for approximately 3 minutes at 80°C using a tunnel pasteurizer (Miele, Switzerland). Colour measurements are performed

directly after beverage preparation (time = 0).

Color measurements

Color measurements for the application in food are performed with a colorimeter (Hunter Lab Ultra Scan Pro) which expresses color values according to the psychophysical perception of color by human eye.
Color measurements are carried out after CIE guidelines (Commission International d'Eclairage). Values can be expressed either as planar coordinates L*a*b* with L* being the measuring value for lightness, with a*being the value on the red-green-axis and with b* being the value on the yellow-blue-axis.

Instrument settings:

Color scale : CIE L*a*b* / L*C*h*
Light source definition: D65 daylight equivalent
Geometry : Diffuse / 8°
Wavelengths: scan 350 to 1050 nm in 5 nm optical resolution
Sample measurement area diameter: 19 mm (large)
Calibration mode: Transmission/ white tile
The Chroma (C*) sometimes called saturation describes the vividness or dullness of a color which can be calculated as followed:

$$C^* = \surd(a^*2+b^*2)$$

The angle called hue (h) describes how we perceive an object's color and can be calculated as followed:

$$h=\tan(b/a)(-1)$$

The color change DE* is calculated as follows:

$$DE^* = \sqrt{(\Delta L)^2 + (\Delta a)^2 + (\Delta b)^2}$$

Colour stability:

DE* < 3 = not visible for the human eye

DE* > 3 to 10 = visible for the human eye but acceptable

DE* > 10 = not acceptable

Color values

Table 3: Non-pasteurized soft-drink with granules according to example 1

| | Initial value | After 14 days | After 30 days | After 60 days |
|---|---|---|---|---|
| L* | 90.19 | 90.15 | 90.26 | 90.21 |
| a* | 3.75 | 3.84 | 3.79 | 3.80 |
| b* | 29.75 | 30.29 | 29.95 | 29.96 |
| C* | 29.99 | 30.53 | 30.19 | 30.20 |
| h* | 82.82 | 82.77 | 82.79 | 82.77 |
| DE* after 60 days = 0.22 | | | | |

Table 4: Non-pasteurized soft-drink with granules according to example 2

| | Initial value | After 14 days | After 30 days | After 60 days |
|---|---|---|---|---|
| L* | 88.86 | 88.93 | 88.85 | 88.99 |
| a* | 4.83 | 4.83 | 4.87 | 4.78 |
| b* | 36.35 | 36.30 | 36.52 | 36.01 |
| C* | 36.67 | 36.62 | 36.84 | 36.33 |
| h* | 82.43 | 82.42 | 82.40 | 82.44 |
| DE* after 60 days = 0.37 | | | | |

Table 5: Non-pasteurized soft-drink with granules according to example 3

| | Initial value | After 14 days | After 30 days | After 60 days |
|---|---|---|---|---|
| L* | 89.56 | 89.52 | 89.53 | 89.67 |
| a* | 4.36 | 4.39 | 4.41 | 4.30 |
| b* | 31.62 | 32.07 | 31.98 | 31.59 |
| C* | 31.92 | 32.37 | 32.28 | 31.88 |
| h* | 82.15 | 82.21 | 82.15 | 82.25 |
| DE* after 60 days = 0.13 | | | | |

Table 6: Pasteurized soft-drink with granules according to example 1

| | Initial value | After 14 days | After 30 days | After 60 days |
|---|---|---|---|---|
| L* | 90.00 | 90.17 | 90.19 | 90.26 |
| a* | 3.94 | 3.95 | 3.81 | 3.75 |
| b* | 30.31 | 29.63 | 29.70 | 29.41 |
| C* | 30.57 | 29.89 | 29.94 | 29.65 |
| h* | 82.59 | 82.41 | 82.69 | 82.73 |
| DE* after 60 days = 0.96 | | | | |

Table 7: Pasteurized soft-drink with granules according to example 2

| | Initial value | After 14 days | After 30 days | After 60 days |
|---|---|---|---|---|
| L* | 88.72 | 88.91 | 88.96 | 88.96 |
| a* | 4.96 | 4.92 | 4.77 | 4.75 |
| b* | 36.34 | 35.69 | 35.50 | 35.69 |
| C* | 36.68 | 36.03 | 35.82 | 36.00 |
| h* | 82.23 | 82.15 | 82.35 | 82.42 |
| DE* after 60 days = 0.72 | | | | |

Table 8: Pasteurized soft-drink with granules according to example 3

| | Initial value | After 14 days | After 30 days | After 60 days |
|---|---|---|---|---|
| L* | 89.37 | 89.48 | 89.63 | 89.63 |
| a* | 4.53 | 4.52 | 4.30 | 4.30 |
| b* | 31.82 | 31.59 | 31.19 | 31.25 |
| C* | 32.14 | 31.91 | 31.49 | 31.54 |
| h* | 81.90 | 81.86 | 82.15 | 82.17 |
| DE* after 60 days = 0.67 | | | | |

As can be seen from the values given above, the color is stable over 60 days with a DE* in all cases < 1.

Turbidity measurements

Suspended solids (or particles) are responsible for the turbid appearance of beverages containing juice. This turbid appearance can be evaluated by turbidity measurements. Turbidity depends on the light-scattering properties of such particles: their size, their shape and their refractive index.

In this work turbidity measurements were conducted using a Turbidimeter (Hach 2100N IS®, USA) and turbidity values were given in NTU (nephelometric turbidity units). Neophelometer measures the light scattered by a sample in 90° from the incident light path.

Tab. 9 shows the results obtained for the turbidity of the non-pasteurized soft drinks.

| | **Example 1** | **Example 2** | **Example 3** |
|---|---|---|---|
| **Turbidity initial [NTU]** | 129.0 | 134.0 | 136.0 |
| **Turbidity after 14 days [NTU]** | 125.0 | 131.0 | 127.0 |
| **Turbidity after 30 days [NTU]** | 121.0 | 122.0 | 131.0 |
| **Turbidity after 60 days [NTU]** | 117.0 | 127.0 | 119.0 |

Tab. 10 shows the results obtained for the turbidity of the pasteurized soft drinks.

| | **Example 1** | **Example 2** | **Example 3** |
|---|---|---|---|
| **Turbidity initial [NTU]** | 127.0 | 131.0 | 135.0 |
| **Turbidity after 14 days [NTU]** | 123.0 | 130.0 | 132.0 |
| **Turbidity after 30 days [NTU]** | 122.0 | 130.0 | 128.0 |
| **Turbidity after 60 days [NTU]** | 116.0 | 126.0 | 127.0 |

Physical stability

After 14, 30 and 60 days of storage the non-pasteurized and pasteurized soft drinks are evaluated visually concerning their physical appearance. Hereby the samples are examined visually whether they show a ring in the bottle neck, whether they show particles on the surface and whether they show white sediments. The following schedule of notes is applied:

Ring in bottle neck:

6 = no ring

5 = hardly noticeable ring

4 = recognizable ring

3 = clear fine ring recognizable

2 = strong ring recognizable

1 = broad ring recognizable

Particles on surface:

6 = no particles

5 = 1 to 10 particles

4 = more than 10 particles

3 = not countable anymore

2 = half of the surface covered

1 = more than half of the surface covered

Sediment:

6 = no sediment

5 = slight matt glimmer 4 = fine matt sediment

3 = matt sediment

2 = strong matt sediment

1 = very strong matt sediment

For a good performance, scores should be ≥ 3.

Tab. 11 shows the results obtained for the appearance evaluation of the non-pasteurized soft drinks.

| Soft drink containing a powder according to example | Ring in bottle neck | Particles on the surface | White sediment |
|---|---|---|---|
| **1 (14 days)** | 4 | 3 | 4 |
| **1 (30 days)** | 4 | 5 | 3 |
| **1 (60 days)** | 3 | 4 | 4 |
| **2 (14 days)** | 5 | 4 | 4 |
| **2 (30 days)** | 5 | 4 | 4 |
| **2 (60 days)** | 3 | 4 | 4 |
| **3 (14 days)** | 5 | 4 | 4 |
| **3 (30 days)** | 4 | 4 | 4 |

(continued)

| Soft drink containing a powder according to example | Ring in bottle neck | Particles on the surface | White sediment |
|---|---|---|---|
| **3 (60 days)** | 3 | 4 | 4 |

The samples show a very good performance with respect to their appearance attributes.

Tab. 12 shows the results obtained for the appearance evaluation of the pasteurized soft drinks.

| Soft drink containing a powder according to example | Ring in bottle neck | Particles on the surface | White sediment |
|---|---|---|---|
| **1 (14 days)** | 5 | 4 | 4 |
| **1 (30 days)** | 4 | 4 | 4 |
| **1 (60 days)** | 3 | 3 | 4 |
| **2 (14 days)** | 5 | 5 | 4 |
| **2 (30 days)** | 4 | 4 | 5 |
| **2 (60 days)** | 3 | 5 | 4 |
| **3 (14 days)** | 4 | 3 | 4 |
| **3 (30 days)** | 4 | 5 | 4 |
| **3 (60 days)** | 3 | 4 | 4 |

Also in pasteurized drinks, the samples show a very good performance with respect to their appearance attributes.

Tab. 13: Chemical stability of the non-pasteurized soft-drinks; given is the measured amount of lutein in %, based on the initial value

| | Initial value | After 14 days | After 30 days | After 60 days |
|---|---|---|---|---|
| Example 1 | 100.00 | 95.93 | 92.68 | 91.06 |
| Example 2 | 100.00 | 91.60 | 90.84 | 87.79 |
| Example 3 | 100.00 | 95.97 | 94.35 | 88.71 |

Tab. 14: Chemical stability of pasteurized soft-drinks; given is the measured amount of lutein in %, based on the initial value

| | Initial value | After 14 days | After 30 days | After 60 days |
|---|---|---|---|---|
| Example 1 | 100.00 | 91.20 | 92.00 | 89.60 |
| Example 2 | 100.00 | 92.25 | 90.70 | 84.50 |
| Example 3 | 100.00 | 92.86 | 88.10 | 83.33 |

Both, pasteurized and non-pasteurized, soft drinks showed a good chemical stability within 60 days.

## Claims

**1.** Use of granules in beverages, whereby the granules comprise

(i) a milled carotenoid selected from the group consisting of lutein and zeaxanthin and any mixture thereof having the following particle size distribution:

D [3,2] in the range of from 0.6 to 1.5 μm, and D [v, 0.5] in the range of from 1.1 to 3.5 μm, and
(ii) a matrix comprising at least one modified food starch, a glucose syrup and sucrose,
(iii) a water-soluble antioxidant,
wherein the granules have the following particle size distribution:

D [3,2] in the range of from 200 to 300 μm, and D [v, 0.5] in the range of from 220 to 320 μm,
all D values as measured by laser diffraction according to the Fraunhofer scattering model,
whereby the milled carotenoid is encapsulated by the matrix.

**2.** The use according to claim 1, wherein the amount of the milled carotenoid, the amount of the modified food starch, the amount of the glucose syrup, the amount of sucrose and the amount of the water-soluble antioxidant are together at least 90 weight-% of the total weight of the granules.

**3.** The use according to claim 1, wherein the amount of the milled carotenoid, the amount of the modified food starch, the amount of the glucose syrup, the amount of sucrose and the amount of the water-soluble antioxidant are together at least 95 weight-% of the total weight of the granules.

**4.** The use according to any one or more of the preceding claims, wherein the beverages are soft drinks having a pH in the range of from 2 to 5.

**5.** The use according to any one or more of the preceding claims, wherein the granules have the following particle size distribution:
D [3,2] in the range of from 230 to 270 μm and D [v, 0.5] in the range of from 240 to 290 μm, all D values as measured by laser diffraction according to the Fraunhofer scattering model.

**6.** The use according to any one or more of the preceding claims, wherein the milled carotenoid has the following particle size distribution:
D [3,2] in the range of from 0.8 to 1.2 μm (preferably 0.8 to 1.1 μm) and D [v, 0.5] in the range of from 1.1 to 2.6 μm) (preferably 1.1 to 2.1 μm), all D values as measured by laser diffraction according to the Fraunhofer scattering model.

**7.** Granules comprising

(i) a milled carotenoid selected from the group consisting of lutein and zeaxanthin and any mixture thereof having the following particle size distribution:
D [3,2] in the range of from 0.6 to 1.5 μm, and D [v, 0.5] in the range of from 1.1 to 3.5 μm, and
(ii) a matrix comprising at least one modified food starch, a glucose syrup and sucrose,
(iii) a water-soluble antioxidant,
wherein the granules have the following particle size distribution:

D [3,2] in the range of from 200 to 300 μm, and D [v, 0.5] in the range of from 220 to 320 μm),
all D values as measured by laser diffraction according to the Fraunhofer scattering model,
whereby the milled carotenoid is encapsulated by the matrix.

**8.** The granules according to claim 7, wherein the amount of the milled carotenoid, the amount of the modified food starch, the amount of the glucose syrup, the amount of sucrose and the amount of the water-soluble antioxidant are together at least 90 weight-% of the total weight of the granules.

**9.** The granules according to claim 7 and/or 8, wherein the amount of the milled carotenoid, the amount of the modified food starch, the amount of the glucose syrup, the amount of sucrose and the amount of the water-soluble antioxidant are together at least 95 weight-% of the total weight of the granules.

**10.** The granules according to any one or more of claims 7 to 9, wherein the amount of modified food starch in kilograms is the same as the total amount of glucose syrup and sucrose in kilograms.

**11.** The granules according to any one or more of claims 7 to 10, wherein the granules have the following particle size distribution:
D [3,2] in the range of from 230 to 270 μm and D [v, 0.5] in the range of from 240 to 290 μm, all D values as measured

by laser diffraction according to the Fraunhofer scattering model.

**12.** The granules according to any one or more of claims 7 to 11, wherein the milled carotenoid has the following particle size distribution:
D [3,2] in the range of from 0.8 to 1.2 μm (preferably 0.8 to 1.1 μm) and D [v, 0.5] in the range of from 1.1 to 2.6 μm (preferably 1.1 to 2.1 μm), all D values as measured by laser diffraction according to the Fraunhofer scattering model.

**13.** The granules according to any one or more of claims 7 to 12, wherein the amount of the milled carotenoid in the granules is in the range of from 1-30 weight-%, more preferably in the range of from 5-25 weight-%, even more preferably in the range of from 5-17 weight-%, most preferably in the range of from 10-17 weight-%, based on the total weight of the granules.

**14.** The granules according to any one or more of claims 7 to 13, wherein the amount of the modified food starch is in the range of from 10 to 50 weight-%, more preferably in the range of from 25 to 45 weight-%, based on the total weight of the granules.

**15.** The granules according to any one or more of claims 7 to 14, wherein the amount of the glucose syrup is in the range of from 5 to 40 weight-%, more preferably in the range of from 10 to 30 weight-%, most preferably in the range of from 15 to 25 weight-%, based on the total weight of the granules.

**16.** The granules according to any one or more of claims 7 to 15, wherein the amount of sucrose is in the range of from 5 to 40 weight-%, more preferably in the range of from 10 to 30 weight-%, most preferably in the range of from 15 to 25 weight-%, based on the total weight of the granules.

**17.** The granules according to any one or more of claims 7 to 16, wherein the amount of the water-soluble anti-oxidant is in the range of from 0.1 to 10 weight-%, more preferably in the range of from 2 to 7 weight-%, most preferably in the range of from 4 to 6 weight-%, based on the total weight of the granules.

**18.** The granules according to any one or more of claims 7 to 17, wherein the granules have a flowability of at least 100 g/min through an orifice with a diameter of 5 mm.

**19.** The granules according to any one or more of claims 7 to 18, wherein the granules do not comprise any of the following compounds: hydrolyzed lecithin products, Gum Arabic, fat-soluble antioxidants, isomalt, α-zeacarotene and β-zeacarotene.

**20.** A beverage comprising granules according to any one or more of claims 7-19.

**21.** The beverage according to claim 20 being a soft drink having a pH in the range of from 2 to 5.

**22.** The beverage according to claim 20 and/or 21 having a color stability DE* ≤ 1 for 60 days.

**23.** The beverage according to any one or more of claims 20 to 22 having a turbidity ≤ 150 NTU.

**24.** A process for the manufacture of granules according to any one or more of claims 7 to 19 comprising the following steps:

a) providing an aqueous solution of at least one modified food starch, a glucose syrup and sucrose;
b) adding the carotenoid selected from the group consisting of lutein and zeaxanthin and any mixture thereof to the solution of step a) hereby obtaining a suspension;
c) milling the suspension of step b) until the following particle size distribution of the milled carotenoid is reached: D [3,2] in the range of from 0.6 to 1.5 μm and D [v, 0.5] in the range of from 1.1 to 3.5 μm, both D values as measured by laser diffraction (Malvern Instruments Ltd, Malvern, UK, Mastersizer 3000) according to the Fraunhofer scattering model;
d) spray-granulating the suspension of step c) to obtain granules according to the present invention;
whereby a water-soluble antioxidant (preferably sodium ascorbate) is added during the process.

## Patentansprüche

1. Verwendung von Granulat in Getränken, wobei das Granulat umfasst:

   (i) ein gemahlenes Carotinoid ausgewählt aus der Gruppe bestehend aus Lutein und Zeaxanthin und einem Gemisch davon mit der folgenden Partikelgrößenverteilung:
   D[3, 2] in dem Bereich von 0,6 bis 1,5 µm und D[v, 0,5] in dem Bereich von 1,1 bis 3,5 µm und
   (ii) eine Matrix, umfassend wenigstens eine modifizierte Lebensmittelstärke, einen Glucosesirup und Saccharose,
   (iii) ein wasserlösliches Antioxidationsmittel,
   wobei das Granulat die folgende Partikelgrößenverteilung aufweist:

   D[3, 2] in dem Bereich von 200 bis 300 µm und D[v, 0,5] in dem Bereich von 220 bis 320 µm,
   alle D-Werte wie gemessen durch Laserdiffraktion gemäß dem Fraunhofer-Streumodell,
   wobei das gemahlene Carotinoid von der Matrix verkapselt ist.

2. Verwendung gemäß Anspruch 1, wobei die Menge des gemahlenen Carotinoids, die Menge der modifizierten Lebensmittelstärke, die Menge des Glucosesirups, die Menge der Saccharose und die Menge des wasserlöslichen Antioxidationsmittels zusammen wenigstens 90 Gew.-% des Gesamtgewichts des Granulats bilden.

3. Verwendung gemäß Anspruch 1, wobei die Menge des gemahlenen Carotinoids, die Menge der modifizierten Lebensmittelstärke, die Menge des Glucosesirups, die Menge der Saccharose und die Menge des wasserlöslichen Antioxidationsmittels zusammen wenigstens 95 Gew.-% des Gesamtgewichts des Granulats bilden.

4. Verwendung gemäß einem oder mehreren der vorstehenden Ansprüche, wobei die Getränke Erfrischungsgetränke mit einem pH-Wert in dem Bereich von 2 bis 5 sind.

5. Verwendung gemäß einem oder mehreren der vorstehenden Ansprüche, wobei das Granulat die folgende Partikelgrößenverteilung aufweist:
   D[3, 2] in dem Bereich von 230 bis 270 µm und D[v, 0,5] in dem Bereich von 240 bis 290 µm, alle D-Werte wie gemessen durch Laserdiffraktion gemäß dem Fraunhofer-Streumodell.

6. Verwendung gemäß einem oder mehreren der vorstehenden Ansprüche, wobei das gemahlene Carotinoid die folgende Partikelgrößenverteilung aufweist: D[3, 2] in dem Bereich von 0,8 bis 1,2 µm (vorzugsweise 0,8 bis 1,1 µm) und D[v, 0,5] in dem Bereich von 1,1 bis 2,6 µm (vorzugsweise 1,1 bis 2,1 µm), alle D-Werte wie gemessen durch Laserdiffraktion gemäß dem Fraunhofer-Streumodell.

7. Granulat, umfassend

   (i) ein gemahlenes Carotinoid ausgewählt aus der Gruppe bestehend aus Lutein und Zeaxanthin und einem Gemisch davon mit der folgenden Partikelgrößenverteilung:
   D[3, 2] in dem Bereich von 0,6 bis 1,5 µm und D[v, 0,5] in dem Bereich von 1,1 bis 3,5 µm und
   (ii) eine Matrix, umfassend wenigstens eine modifizierte Lebensmittelstärke, einen Glucosesirup und Saccharose,
   (iii) ein wasserlösliches Antioxidationsmittel,
   wobei das Granulat die folgende Partikelgrößenverteilung aufweist:

   D[3, 2] in dem Bereich von 200 bis 300 µm und D[v, 0,5] in dem Bereich von 220 bis 320 µm,
   alle D-Werte wie gemessen durch Laserdiffraktion gemäß dem Fraunhofer-Streumodell,
   wobei das gemahlene Carotinoid von der Matrix verkapselt ist.

8. Granulat gemäß Anspruch 7, wobei die Menge des gemahlenen Carotinoids, die Menge der modifizierten Lebensmittelstärke, die Menge des Glucosesirups, die Menge der Saccharose und die Menge des wasserlöslichen Antioxidationsmittels zusammen wenigstens 90 Gew.-% des Gesamtgewichts des Granulats bilden.

9. Granulat gemäß Anspruch 7 und/oder 8, wobei die Menge des gemahlenen Carotinoids, die Menge der modifizierten Lebensmittelstärke, die Menge des Glucosesirups, die Menge der Saccharose und die Menge des wasserlöslichen Antioxidationsmittels zusammen wenigstens 95 Gew.-% des Gesamtgewichts des Granulats bilden.

**10.** Granulat gemäß einem oder mehreren der Ansprüche 7 bis 9, wobei die Menge an modifizierter Lebensmittelstärke in Kilogramm gleich der Gesamtmenge von Glucosesirup und Saccharose in Kilogramm ist.

**11.** Granulat gemäß einem oder mehreren der Ansprüche 7 bis 10, wobei das Granulat die folgende Partikelgrößenverteilung aufweist:
D[3, 2] in dem Bereich von 230 bis 270 μm und D[v, 0,5] in dem Bereich von 240 bis 290 μm, alle D-Werte wie gemessen durch Laserdiffraktion gemäß dem Fraunhofer-Streumodell.

**12.** Granulat gemäß einem oder mehreren der Ansprüche 7 bis 11, wobei das gemahlene Carotenoid die folgende Partikelgrößenverteilung aufweist:
D[3, 2] in dem Bereich von 0,8 bis 1,2 μm (vorzugsweise 0,8 bis 1,1 μm) und D[v, 0,5] in dem Bereich von 1,1 bis 2,6 μm (vorzugsweise 1,1 bis 2,1 μm), alle D-Werte wie gemessen durch Laserdiffraktion gemäß dem Fraunhofer-Streumodell.

**13.** Granulat gemäß einem oder mehreren der Ansprüche 7 bis 12, wobei die Menge des gemahlenen Carotinoids in dem Granulat in dem Bereich von 1-30 Gew.-% liegt, bevorzugter in dem Bereich von 5-25 Gew.-%, noch bevorzugter in dem Bereich von 5-17 Gew.-%, höchst bevorzugt in dem Bereich von 10-17 Gew.-%, bezogen auf das Gesamtgewicht des Granulats.

**14.** Granulat gemäß einem oder mehreren der Ansprüche 7 bis 13, wobei die Menge der modifizierten Lebensmittelstärke in dem Bereich von 10 bis 50 Gew.-% liegt, bevorzugter in dem Bereich von 25 bis 45 Gew.-%, bezogen auf das Gesamtgewicht des Granulats.

**15.** Granulat gemäß einem oder mehreren der Ansprüche 7 bis 14, wobei die Menge des Glucosesirups in dem Bereich von 5 bis 40 Gew.-% liegt, bevorzugter in dem Bereich von 10 bis 30 Gew.-%, höchst bevorzugt in dem Bereich von 15 bis 25 Gew.-%, bezogen auf das Gesamtgewicht des Granulats.

**16.** Granulat gemäß einem oder mehreren der Ansprüche 7 bis 15, wobei die Menge an Saccharose in dem Bereich von 5 bis 40 Gew.-% liegt, bevorzugter in dem Bereich von 10 bis 30 Gew.-%, höchst bevorzugt in dem Bereich von 15 bis 25 Gew.-%, bezogen auf das Gesamtgewicht des Granulats.

**17.** Granulat gemäß einem oder mehreren der Ansprüche 7 bis 16, wobei die Menge des wasserlöslichen Antioxidationsmittels in dem Bereich von 0,1 bis 10 Gew.-% liegt, bevorzugter in dem Bereich von 2 bis 7 Gew.-%, höchst bevorzugt in dem Bereich von 4 bis 6 Gew.-%, bezogen auf das Gesamtgewicht des Granulats.

**18.** Granulat gemäß einem oder mehreren der Ansprüche 7 bis 17, wobei das Granulat eine Fließfähigkeit von wenigstens 100 g/min durch eine Öffnung mit einem Durchmesser von 5 mm aufweist.

**19.** Granulat gemäß einem oder mehreren der Ansprüche 7 bis 18, wobei das Granulat keine der folgenden Verbindungen umfasst: hydrolysierte Lecithinprodukte, Gummi arabicum, fettlösliche Antioxidationsmittel, Isomalt, α-Zeacaroten und β-Zeacaroten.

**20.** Getränk, umfassend Granulat gemäß einem oder mehreren der Ansprüche 7 bis 19.

**21.** Getränk gemäß Anspruch 20, das ein Erfrischungsgetränk mit einem pH-Wert in dem Bereich von 2 bis 5 ist.

**22.** Getränk gemäß Anspruch 20 und/oder 21 mit einer Farbstabilität DE* $\leq$ 1 für 60 Tage.

**23.** Getränk gemäß einem oder mehreren der Ansprüche 20 bis 22 mit einer Trübung von $\leq$ 150 NTU.

**24.** Verfahren zur Herstellung von Granulat gemäß einem oder mehreren der Ansprüche 7 bis 19, umfassend die folgenden Schritte:

a) Bereitstellen einer wässrigen Lösung von wenigstens einer modifizierten Lebensmittelstärke, einem Glucosesirup und Saccharose;
b) Zugeben eines Carotinoids ausgewählt aus der Gruppe bestehend aus Lutein und Zeaxanthin und einem Gemisch davon zu der Lösung von Schritt a), um eine Suspension zu erhalten;
c) Mahlen der Suspension von Schritt b), bis die folgende Partikelgrößenverteilung des gemahlenen Carotenoids

erreicht ist:
D[3, 2] in dem Bereich von 0,6 bis 1,5 μm und D[v, 0,5] in dem Bereich von 1,1 bis 3,5 μm, beide D-Werte wie gemessen durch Laserdiffraktion (Malvern Instruments Ltd., Malvern, UK, Mastersizer 3000) gemäß dem Fraunhofer-Streumodell;
d) Sprühgranulieren der Suspension von Schritt c), um Granulat gemäß der vorliegenden Erfindung zu erhalten; wobei ein wasserlösliches Antioxidationsmittel (vorzugsweise Natriumascorbat) während des Verfahrens zugegeben wird.

## Revendications

1. Utilisation de granulés dans des boissons, dans laquelle les granulés comprennent

(i) un caroténoïde broyé choisi dans le groupe constitué par la lutéine et la zéaxanthine et un mélange quelconque de celles-ci, ayant la distribution granulométrique suivante :
D[3,2] dans la plage allant de 0,6 à 1,5 μm, et D[v, 0,5] dans la plage allant de 1,1 à 3,5 μm, et
(ii) une matrice comprenant au moins un amidon alimentaire modifié, un sirop de glucose et du saccharose,
(iii) un antioxydant hydrosoluble,
dans laquelle les granulés présentent la distribution granulométrique suivante :

D[3,2] dans la plage allant de 200 à 300 μm, et D[v, 0,5] dans la plage allant de 220 à 320 μm,
toutes les valeurs D étant telles que mesurées par diffraction au laser selon le modèle de diffusion de Fraunhofer,
où le caroténoïde broyé est encapsulé par la matrice.

2. Utilisation selon la revendication 1, dans laquelle la quantité de caroténoïde broyé, la quantité d'amidon alimentaire modifié, la quantité de sirop de glucose, la quantité de saccharose et la quantité d'antioxydant hydrosoluble, totalisent au moins 90% en poids du poids total des granulés.

3. Utilisation selon la revendication 1, dans laquelle la quantité de caroténoïde broyé, la quantité d'amidon alimentaire modifié, la quantité de sirop de glucose, la quantité de saccharose et la quantité d'antioxydant hydrosoluble, totalisent au moins 95% en poids du poids total des granulés.

4. Utilisation selon l'une ou plusieurs quelconques parmi les revendications précédentes, dans laquelle les boissons sont des boissons non alcoolisées ayant un pH dans la plage allant de 2 à 5.

5. Utilisation selon l'une ou plusieurs quelconques parmi les revendications précédentes, dans laquelle les granulés présentent la distribution granulométrique suivante :
D[3,2] dans la plage allant de 230 à 270 μm, et D[v, 0,5] dans la plage allant de 240 à 290 μm, toutes les valeurs D étant telles que mesurées par diffraction au laser selon le modèle de diffusion de Fraunhofer.

6. Utilisation selon l'une ou plusieurs quelconques parmi les revendications précédentes, dans laquelle le caroténoïde broyé présente la distribution granulométrique suivante :
D[3,2] dans la plage allant de 0,8 à 1,2 μm (préférablement de 0,8 à 1,1 μm), et D[v, 0,5] dans la plage allant de 1,1 à 2,6 μm (préférablement de 1,1 à 2,1 μm), toutes les valeurs D étant telles que mesurées par diffraction au laser selon le modèle de diffusion de Fraunhofer.

7. Granulés, comprenant

(i) un caroténoïde broyé choisi dans le groupe constitué par la lutéine et la zéaxanthine et un mélange quelconque de celles-ci, ayant la distribution granulométrique suivante :
D[3,2] dans la plage allant de 0,6 à 1,5 μm, et D[v, 0,5] dans la plage allant de 1,1 à 3,5 μm, et
(ii) une matrice comprenant au moins un amidon alimentaire modifié, un sirop de glucose et du saccharose,
(iii) un antioxydant hydrosoluble,
les granulés présentant la distribution granulométrique suivante :

D[3,2] dans la plage allant de 200 à 300 μm, et D[v, 0,5] dans la plage allant de 220 à 320 μm,
toutes les valeurs D étant telles que mesurées par diffraction au laser selon le modèle de diffusion de

Fraunhofer,
où le caroténoïde broyé est encapsulé par la matrice.

8. Granulés selon la revendication 7, dans lesquels la quantité de caroténoïde broyé, la quantité d'amidon alimentaire modifié, la quantité de sirop de glucose, la quantité de saccharose et la quantité d'antioxydant hydrosoluble, totalisent au moins 90% en poids du poids total des granulés.

9. Granulés selon la revendication 7 et/ou 8, dans lesquels la quantité de caroténoïde broyé, la quantité d'amidon alimentaire modifié, la quantité de sirop de glucose, la quantité de saccharose et la quantité d'antioxydant hydrosoluble, totalisent au moins 95% en poids du poids total des granulés.

10. Granulés selon l'une ou plusieurs quelconques parmi les revendications 7 à 9, dans lesquels la quantité d'amidon alimentaire modifié en kilogrammes est la même que la quantité totale de sirop de glucose et de saccharose en kilogrammes.

11. Granulés selon l'une ou plusieurs quelconques parmi les revendications 7 à 10, les granulés présentant la distribution granulométrique suivante :
D[3,2] dans la plage allant de 230 à 270 μm, et D[v, 0,5] dans la plage allant de 240 à 290 μm, toutes les valeurs D étant telles que mesurées par diffraction au laser selon le modèle de diffusion de Fraunhofer.

12. Granulés selon l'une ou plusieurs quelconques parmi les revendications 7 à 11, le caroténoïde broyé présentant la distribution granulométrique suivante :
D[3,2] dans la plage allant de 0,8 à 1,2 μm (préférablement de 0,8 à 1,1 μm), et D[v, 0,5] dans la plage allant de 1,1 à 2,6 μm (préférablement de 1,1 à 2,1 μm), toutes les valeurs D étant telles que mesurées par diffraction au laser selon le modèle de diffusion de Fraunhofer.

13. Granulés selon l'une ou plusieurs quelconques parmi les revendications 7 à 12, dans lesquels la quantité de caroténoïde broyé dans les granulés se trouve dans la plage de 1-30% en poids, plus préférablement dans la plage de 5-25% en poids, encore plus préférablement dans la plage de 5-17% en poids, tout préférablement dans la plage de 10-17% en poids, sur la base du poids total des granulés.

14. Granulés selon l'une ou plusieurs quelconques parmi les revendications 7 à 13, dans lesquels la quantité d'amidon alimentaire modifié se trouve dans la plage allant de 10 à 50% en poids, plus préférablement dans la plage allant de 25 à 45% en poids, sur la base du poids total des granulés.

15. Granulés selon l'une ou plusieurs quelconques parmi les revendications 7 à 14, dans lesquels la quantité de sirop de glucose se trouve dans la plage allant de 5 à 40% en poids, plus préférablement dans la plage allant de 10 à 30% en poids, tout préférablement dans la plage allant de 15 à 25% en poids, sur la base du poids total des granulés.

16. Granulés selon l'une ou plusieurs quelconques parmi les revendications 7 à 15, dans lesquels la quantité de saccharose se trouve dans la plage allant de 5 à 40% en poids, plus préférablement dans la plage allant de 10 à 30% en poids, tout préférablement dans la plage allant de 15 à 25% en poids, sur la base du poids total des granulés.

17. Granulés selon l'une ou plusieurs quelconques parmi les revendications 7 à 16, dans lesquels la quantité d'antioxydant hydrosoluble se trouve dans la plage allant de 0,1 à 10% en poids, plus préférablement dans la plage allant de 2 à 7% en poids, tout préférablement dans la plage allant de 4 à 6% en poids, sur la base du poids total des granulés.

18. Granulés selon l'une ou plusieurs quelconques parmi les revendications 7 à 17, les granulés ayant une coulabilité d'au moins 100 g/min à travers un orifice ayant un diamètre de 5 mm.

19. Granulés selon l'une ou plusieurs quelconques parmi les revendications 7 à 18, les granulés ne comprenant aucun parmi l'un des composés suivants : des produits de lécithine hydrolysée, de la gomme arabique, des antioxydants liposolubles, de l'isomalt, de l'a-zéacarotène et du β-zéacarotène.

20. Boisson comprenant des granulés selon l'une ou plusieurs quelconques parmi les revendications 7-19.

21. Boisson selon la revendication 20, qui est une boisson non alcoolisée ayant un pH dans la plage allant de 2 à 5.

**22.** Boisson selon la revendication 20 et/ou 21, ayant une stabilité de coloration DE* ≤ 1 pendant 60 jours.

**23.** Boisson selon l'une ou plusieurs quelconques parmi les revendications 20 à 22, ayant une turbidité ≤ 150 NTU.

**24.** Procédé de fabrication de granulés selon l'une ou plusieurs quelconques parmi les revendications 7 à 19, comprenant les étapes suivantes :

a) la mise à disposition d'une solution aqueuse d'au moins un amidon alimentaire modifié, d'un sirop de glucose et de saccharose ;
b) l'addition du caroténoïde choisi dans le groupe constitué par la lutéine et la zéaxanthine et un mélange quelconque de celles-ci, à la solution de l'étape a), conduisant ainsi à une suspension ;
c) le broyage de la suspension de l'étape b) jusqu'à l'obtention de la distribution granulométrique suivante du caroténoïde broyé :
D[3,2] dans la plage allant de 0,6 à 1,5 μm, et D[v, 0,5] dans la plage allant de 1,1 à 3,5 μm, les deux valeurs D étant telles que mesurées par diffraction au laser (Malvern Instruments Ltd, Malvern, R.-U., Mastersizer 3000) selon le modèle de diffusion de Fraunhofer ;
d) la granulation par pulvérisation de la suspension de l'étape c) afin d'obtenir des granulés selon la présente invention ;
dans lequel un antioxydant hydrosoluble (de préférence l'ascorbate de sodium) est ajouté pendant le procédé.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1964479 A1
- WO 2009071295 A
- WO 2007009601 A
- WO 2008110225 A
- WO 2009147158 A
- WO 2011039336 A
- US 20080026124 A


### Non-patent literature cited in the description


- Modified Starches: Properties and Uses. CRC Press, Inc, 1986
- **DR. ALAN RAWLE.** Basic principles of particle size analytics. Malvern Instruments Limited, Enigma Business Part
- Manual of Malvern particle size analyzer. *Particular reference is made to the user manual number MAN 0096,* November 1994